Europäisches Patentamt

European Patent Office

Office européen des brevets

(19)

(11) Veröffentlichungsnummer: **0 135 808**
**B1**

(12) **EUROPÄISCHE PATENTSCHRIFT**

(45) Veröffentlichungstag der Patentschrift:
**07.10.87**

(21) Anmeldenummer: **84110034.0**

(22) Anmeldetag: **23.08.84**

(51) Int. Cl.⁴: **F 16 F  13/00,** B 60 G  15/06,
F 16 F  1/12

(54) **Federnde Aufhängeeinrichtung, insbesondere Radaufhängung für Kraftfahrzeuge.**

(30) Priorität: **13.09.83  DE 3332985**

(43) Veröffentlichungstag der Anmeldung:
**03.04.85 Patentblatt 85/14**

(45) Bekanntmachung des Hinweises auf die Patenterteilung:
**07.10.87 Patentblatt 87/41**

(84) Benannte Vertragsstaaten:
**AT BE DE FR GB IT NL SE**

(56) Entgegenhaltungen:
**DE - A - 1 801 676**
**FR - A - 2 297 150**
**FR - A - 2 442 732**

(73) Patentinhaber: **Gebr. Ahle GmbH & Co.,**
**D-5253 Lindlar 2 (DE)**

(72) Erfinder: **Borlinghaus, Artur, Espenweg 19,**
**D-5270 Gummersbach-Berghausen (DE)**

(74) Vertreter: **Feder, Heinz, Dr. et al, Dominikanerstrasse 37,**
**D-4000 Düsseldorf 11 (DE)**

ACTORUM AG

## Beschreibung

Gegenstand der Erfindung ist eine federnde Aufhängeeinrichtung, insbesondere eine Radaufhängung für Kraftfahrzeuge, mit einem von einer Schraubendruckfeder umgebenen Teleskop-Stossdämpfer, wobei die beiden gegeneinander verschiebbaren Teile des Stossdämpfers jeweils mit einem der Enden der Schraubendruckfeder kraftschlüssig verbunden sind und die Längsachse des Stossdämpfers gegenüber der Mittelachse der Schraubendruckfeder versetzt angeordnet ist und an mindestens einem Ende der Schraubendruckfeder der Federdraht auf einer Spirale nach innen geführt ist, wobei die Spirale so gelegt ist, dass der vom Stossdämpfer durchsetzte Teil des Federinnenraumes von den Spiralwindungen mindestens teilweise umfasst ist. Eine derartige Aufhängeeinrichtung ist bekannt und beispielsweise in der DE-A-29 36 222 beschrieben.

Bei bekannten Aufhängeeinrichtungen dieser Bauart (siehe auch DE-C-1 430 586) soll durch die versetzte Anordnung der Achse des Stossdämpfers gegenüber der Achse der Schraubendruckfeder erreicht werden, dass bei einer Radaufhängung das durch die Radlast hervorgerufene, auf den Stossdämpfer wirkende Biegemoment aufgehoben wird und somit die Lagerreibung und Klemmung der Führungsbüchsen im Stossdämpfer wesentlich verringert wird. Dadurch soll das Ansprechen der Radführung bei geringen Fahrbahnstössen verbessert werden. Die Versetzung des Längsachse des Stossdämpfers gegenüber der Mittelachse der Schraubendruckfeder kann erreicht werden, indem diese Längsachse entweder schräg zur Mittelachse der Feder geführt ist, oder dadurch, dass sie parallel, aber exzentrisch zur Mittelachse der Schraubenfeder angeordnet ist.

Es hat sich gezeigt, dass bei praktischen Ausführungen der bekannten Aufhängeeinrichtung Schwierigkeiten auftreten, die darauf zurückzuführen sind, dass bei Schraubenfedern, beispielsweise Zylinderfedern, die sich beiseitig an einem Auflageteller abstützen, ein exakter Kraftangriffspunkt der Schraubenfeder am Stossdämpfer nicht ohne weiteres zu erreichen ist. Bei zylindrischen Schraubenfedern mit an Auflagetellern anliegenden Endwindungen liegt nämlich der Kraftmittelpunkt im allgemeinen nicht in der Federmitte. Ausserdem verändert sich die Lage des Kraftmittelpunktes bei zunehmender Belastung, und es treten Unterschiede in der Lage des Kraftmittelpunktes zwischen den Federn einer Serie auf. Dies hat zur Folge, dass der mit der bekannten Aufhängeeinrichtung beabsichtigte Effekt in der Praxis oft nicht erreicht werden kann.

Es hat sich weiterhin gezeigt, dass bei zylindrischen Schraubendruckfedern an der Überleitungsstelle zwischen den an der Federarbeit teilnehmenden Federwindungen und der nicht federnden Endwindung zusätzlich Biegespannungen auftreten, welche die in der Feder herrschenden Torsionsspannungen an dieser Stelle überlagern, wodurch die Spannung in diesem Bereich erhöht und damit die Lebensdauer der Feder herabgesetzt wird. Weiterhin wird durch die Berührung zwischen der Endwindung und der sich anschliessenden federnden Windung die Lackierung der Feder nach kurzer Zeit zerstört, was eine frühzeitige Korrosion und damit häufig einen zu zeitigen Bruch der Feder an dieser Stelle verursacht.

Die der Erfindung zugrunde liegende Aufgabe bestand darin, eine federnde Aufhängeeinrichtung der eingangs erwähnten Art so auszubilden, dass ein genauer Kraftangriffspunkt der Schraubendruckfeder am Stossdämpfer erreicht wird, dass die Spannung in der Endwindung vermindert werden kann und dass keine gegenseitige Berührung zwischen der Endwindung und der sich anschliessenden federnden Windung auftreten kann, um Beschädigungen des Oberflächenschutzes und Korrosion sowie Geräuschbildung zu vermeiden.

Die Lösung dieser Aufgabe erfolgt erfindungsgemäss mit den im kennzeichnenden Teil des Patentanspruchs 1 angegebenen Merkmalen.

Durch die besondere Ausbildung der Schraubendruckfeder an mindestens einem ihrer Enden stützt sich diese nunmehr an diesem Ende nicht mehr auf einem Federauflageteller ab, sondern durch die Federaufnahme ist das aus dem Federende herausgeführte Ende des Federdrahtes gefasst und somit ein wesentlich genauerer Kraftangriffspunkt sichergestellt. Da an den in dieser Weise ausgebildeten Federenden auch kein Auflegen der federnden Windungen auf die Endwindung stattfinden kann, werden an dieser Stelle die zusätzlichen Biegespannungen sowie die Beschädigung der Korrosionsschutzschicht vermieden, was eine Erhöhung der Lebensdauer der Feder zur Folge hat. Weiterhin können an dieser Stelle auch keine Geräusche durch sich aufeinanderlegende Federwindungen auftreten.

Es hat sich gezeigt, dass die erfindungsgemässe Aufhängeeinrichtung auch eine Materialersparnis bei der verwendeten Schraubendruckfeder ermöglichen, da die bei Verwendung eines Federtellers notwendige tote Endwindung, die sich über etwa ¾ eines Windungsumfanges erstreckt, entfällt. Dieser Vorteil kommt besonders dann zur Geltung, wenn die Schraubendruckfeder an beiden Enden in der erfindungsgemässen Weise auf einer Spirale nach innen geführt ist. Weiterhin tritt eine Gewichts- und Materialersparnis durch den Wegfall mindestens eines Federtellers und des am Federteller gegebenenfalls angeordneten Gummiringes zum Schutz der Endwindung ein.

Verschiedene vorteilhafte Ausführungsformen der erfindungsgemässen Aufhängeeinrichtung sind möglich und Gegenstand der Unteransprüche.

So kann beispielsweise die Spirale, auf welcher der Federdraht nach innen geführt ist, eine oder mehrere Windungen aufweisen. Die Spirale muss so gelegt sein, dass innerhalb des Innenraums der Schraubendruckfeder ausreichend Platz für die Hindurchführung des Stossdämpfers bleibt. Dies bedeutet, dass Länge und Verlauf des spiralig nach innen geführten Abschnittes des Federdrahtes abhängig von der Dicke und der Stellung des Stossdämpfers sind. Es sind hier verschiedene Ausführungsformen möglich, welche auch mit verschiedenen Typen von Spiralen verwirklichbar sind, wie dies in den Merkmalen der Ansprüche 7 bis 9 angegeben ist. Grundsätzlich hat es sich als vorteilhaft erwiesen, wenn die Länge des spiralig nach innen geführten Abschnittes des Federdrahtes möglichst lang ausgebildet ist.

Grundsätzlich kann die erfindungsgemässe Aufhängeeinrichtung mit sehr verschiedenen Typen von Schraubendruckfedern verwirklicht werden, so beispielsweise mit Zylinderfedern, Kegelstumpffedern oder Federn, die sich aus zylindrischen und kegelstumpfförmigen Teilen zusammensetzen.

Zweckmässig ist es, wenn die in die Büchse eingeführten Enden des Federdrahtes gegen Verdrehen und Herausfallen bei Federbruch gesichert sind, wie dies beispielsweise in Anspruch 5 beschrieben ist. Es kann dann auf weitere Schutzmassnahmen, beispielsweise Federteller, durch welche die Schraubendruckfeder bei Bruch gegen Herunterfallen gesichert wird, verzichtet werden.

Im folgenden werden anhand der beigefügten Zeichnungen Ausführungsbeispiele für die erfindungsgemässe Aufhängeeinrichtung näher beschrieben.

Es zeigen:

Fig. 1 eine erste Ausführungsform einer erfindungsgemässen Aufhängeeinrichtung in teilweise geschnittener Seitenansicht im ausgefederten Zustand;

Fig. 2 die Ausführungsform nach Fig. 1 im eingefederten Zustand;

Fig. 3 die Ausführungsform nach den Fig. 1 und 2 in Draufsicht;

Fig. 4 eine andere Ausführungsform einer Aufhängeeinrichtung nach der Erfindung in einer Darstellung analog Fig. 1;

Fig. 5 die Ausführungsform gemäss Fig. 4 in einer Darstellung analog Fig. 2;

Fig. 6 die Ausführungsform nach Fig. 4 in einer Darstellung analog Fig. 3;

Fig. 7 in einer Teildarstellung eine Variante der Befestigung des Federdrahtendes in der Büchse.

Fig. 8 in einer Teildarstellung eine Ausführungsform mit einer anderen Ausbildung der Federaufnahme.

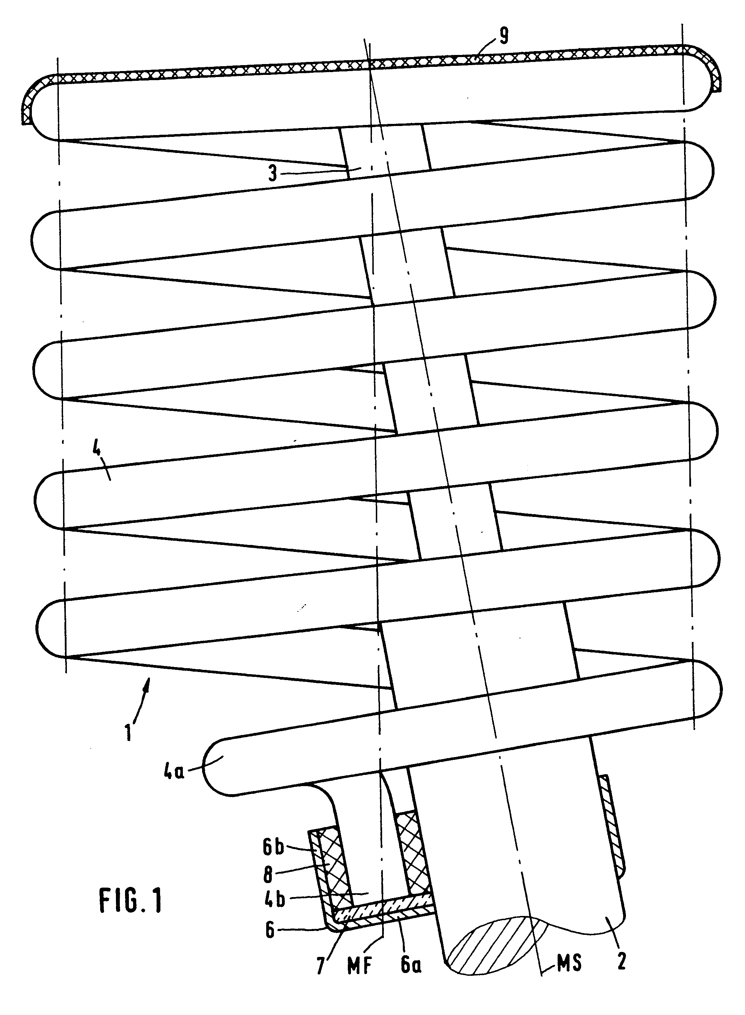

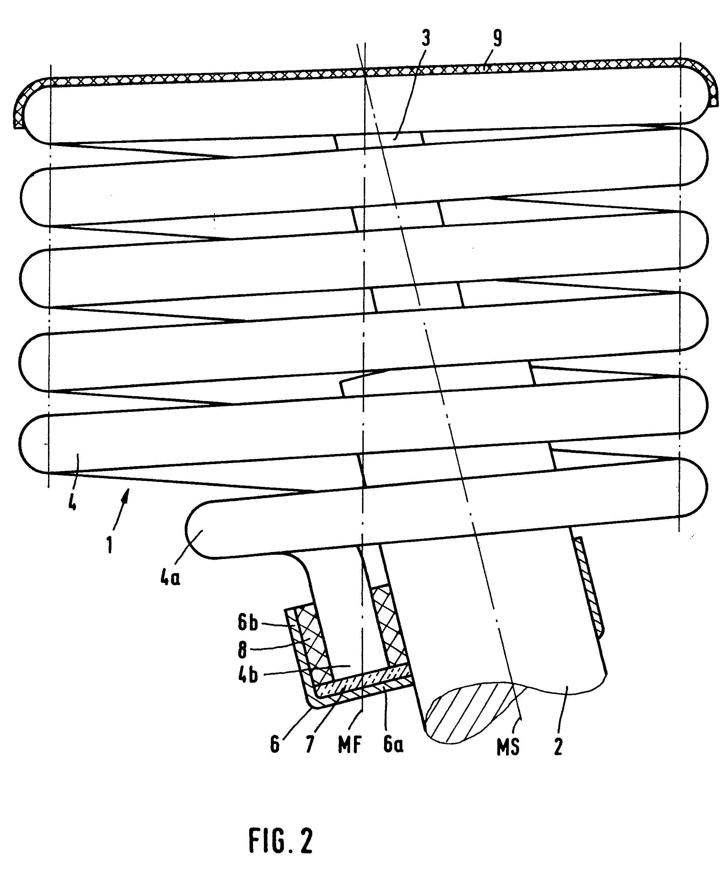

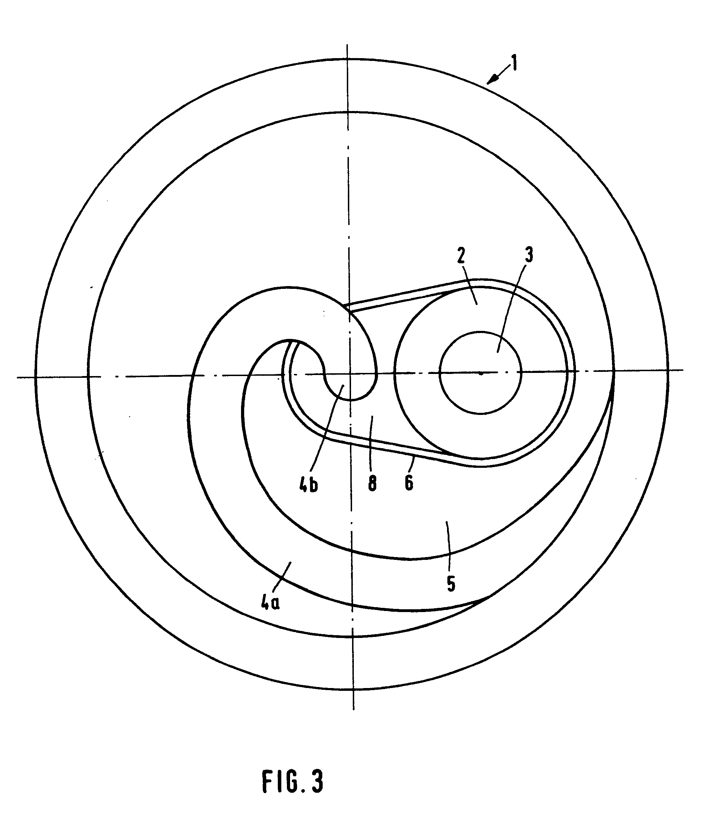

In den Fig. 1 bis 3 ist eine federnde Aufhängeeinrichtung dargestellt, die beispielsweise Teil der Radaufhängung eines Kraftfahrzeuges sein kann. Innerhalb einer zylindrischen Schraubendruckfeder 1 ist ein aus zwei gegeneinander verschiebbaren Teilen 2 und 3 bestehender Teleskop-Stossdämpfer so angeordnet, dass die Längsachse MS des Stossdämpfers schräg zur Mittelachse MF der Schraubendruckfeder 1 steht und diese Mittelachse am in Fig. 1 oberen Ende der Schraubendruckfeder 1 schneidet. Das obere Ende der Schraubendruckfeder 1 stützt sich an einem Federauflageteller 9 ab. Vor dem in Fig. 1 unteren Ende der Schraubendruckfeder 1 ist der Federdraht 4 spiralig nach innen geführt, wobei dieser spiralige Abschnitt 4a weniger als eine Windungslänge beträgt. Der spiralige Abschnitt 4a lässt dabei im Inneren der Schraubendruckfeder 1 einem Raum 5 frei, den er umfasst und durch den der Stossdämpfer 2, 3 hindurchgeführt ist. Nach etwa einer ¾ Windung befindet sich der spiralige Abschnitt 4a in unmittelbarer Nähe der Mittelachse MF der Schraubendruckfeder 1. Dort ist er um etwa 90° zum Federende hin abgebogen, und zwar so, dass, wie aus Fig. 1 zu ersehen, das Ende 4b des Federdrahtes 4 im wesentlichen parallel zur Längsachse MS des Stossdämpfers 2, 3 aus dem Ende der Schraubendruckfeder 1 herausgeführt ist und das äussere Ende des herausgeführten Abschnittes 4b auf der Mittelachse MF der Schraubendruckfeder 1 liegt. Das Ende des äusseren Abschnittes 4b ist in eine Federaufnahme 6 eingeführt, die als am unteren Teilen 2 des Stossdämpfers befestigte Büchse ausgebildet ist. Zwischen dem Ende des Drahtabschnittes 4b und dem Boden 6a der Büchse 6 ist eine Platte 7 angeordnet, die aus einem Material besteht, das nicht elastisch und weicher als das Federmaterial und das Material der Büchse ist. Die Platte 7 kann beispielsweise aus Blei, Zinn, Zink, Bronze, Kupfer oder auch aus Kunststoff (Polyurethan) bestehen. Durch diese Platte 7 soll eine gute Druckverteilung auf dem Boden 6a der Büchse 6 erreicht werden, und es sollen Geräusche vermieden werden. Zwischen der Mantelfläche des Endabschnittes 4b des Federdrahtes 4 und der Innenwand 6b der Büchse 6 ist eine Füllung 8 aus Gummi oder Kunststoff angeordnet, damit eine Berührung zwischen dem Federdraht und der Federaufnahme bzw. dem Stossdämpfer 2 und dadurch auftretende Geräusche vermieden werden.

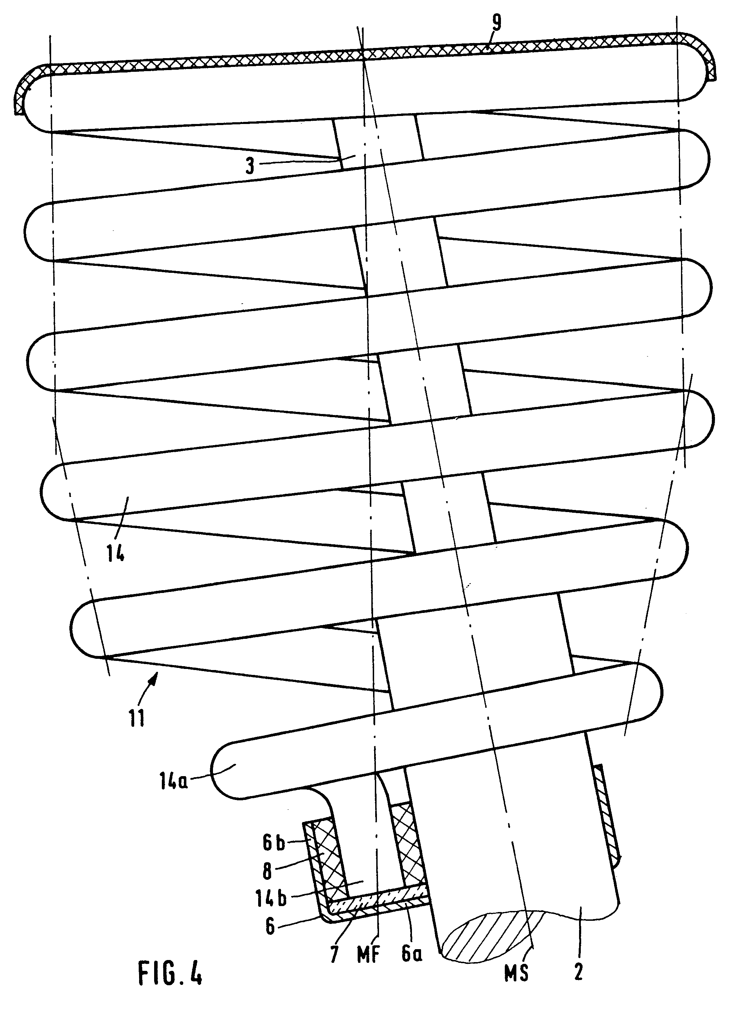

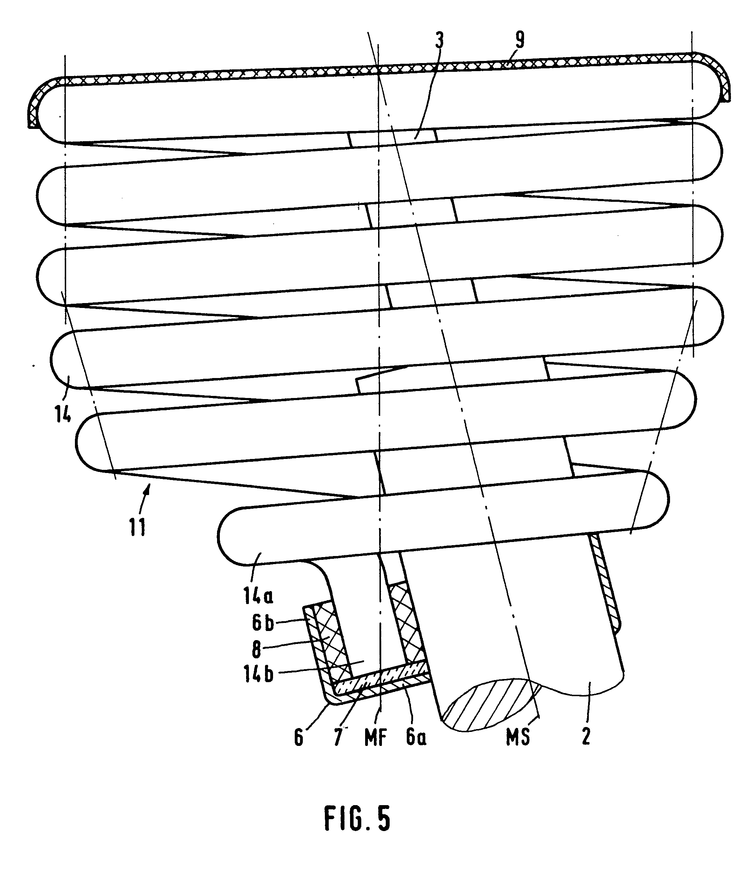

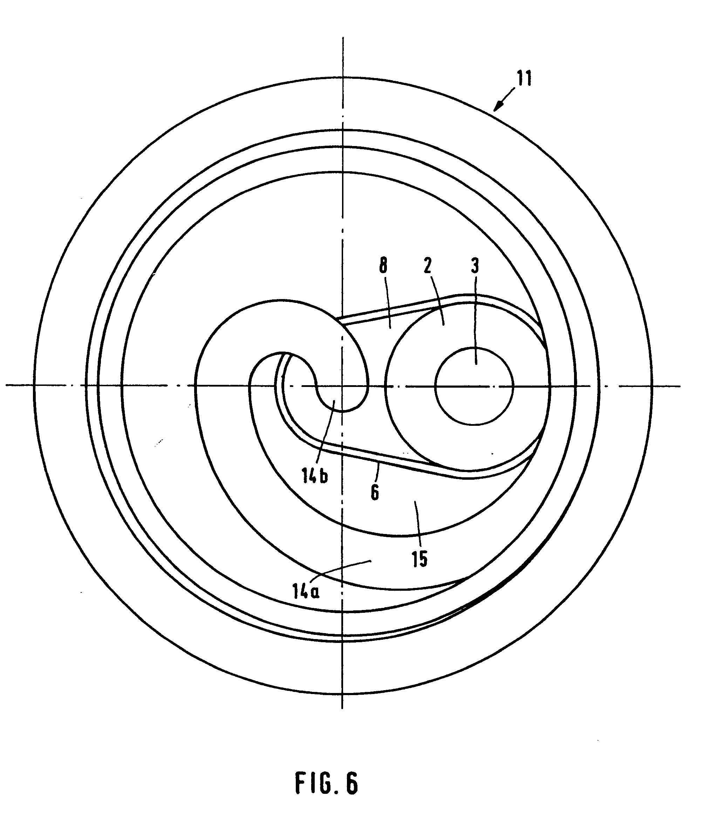

Bei der Ausführungsform nach den Fig. 4 bis 6 sind gleiche Teile mit gleichen Bezugsziffern bezeichnet. Die Ausführungsform nach den Fig. 4 bis 6 unterscheidet sich von der Ausführungsform nach den Fig. 1 bis 3 dadurch, dass der spiralig nach innen geführte Abschnitt 14a des Federdrahtes 14 der zylindrischen Schraubendruckfeder 11 mehrere Windungen aufweist, die so geführt sind, dass in der einen Hälfte des Innenraumes der Schraubendruckfeder 11 ein Teilraum 15 zur Hindurchführung des Stossdämpfers 2, 3 freibleibt.

Nach etwa 2½ Windungen ist der Federdraht 14 in der unmittelbaren Umgebung der Mittelachse MF der Schraubendruckfeder 11 zum Federende hin abgebogen, und der abgebogene Abschnitt 14b ist aus dem Federende herausgeführt und über eine Federaufnahme 6 in der gleichen Weise mit dem unteren Teil 2 des Stossdämpfers befestigt, wie dies bereits anhand der Fig. 1 bis 3 beschrieben wurde.

Wie aus den Fig. 4 bis 6 unmittelbar ersichtlich, folgt der spiralig nach innen geführte Abschnitt 14a einer konischen Spirale. Die Schraubendruckfeder 11 setzt sich also aus einem sich daran anschliessenden kegelsumpfförmigen Teil zusammen.

Damit bei einem eventuellen Bruch einer Schraubendruckfeder das in der Federaufnahme 6 befestigte axial aus der Feder herausgeführte Ende des Federdrahtes nicht aus der Federaufnahme herausspringen kann, ist es zweckmässig, dieses

5        0 135 808        6

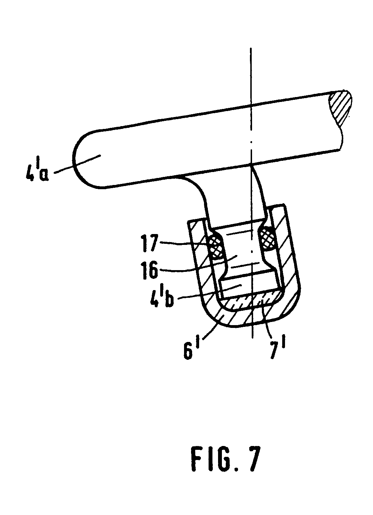

Ende in der Federaufnahme durch besondere Massnahmen zu fixieren. Eine solche Möglichkeit ist in Fig. 7 dargestellt.

Das aus dem Ende der Schraubendruckfeder herausgeführte Ende 4'b des spiraligen Abschnittes 4'a des Federdrahtes ist in die Büchse 6' eingeführt, wobei wiederum zwischen dem Ende des Drahtabschnittes 4'b und dem Boden der Büchse eine Platte 7' aus nichtelastischem weichem Material angeordnet ist, wie weiter oben beschrieben. In die Mantelfläche des Federdrahtendes 4'b ist eine Nut 16 eingearbeitet, in die ein Ring 17 aus gummielastischem Material eingelegt ist. Die Abmessungen des Ringes 17 sind so gewählt, dass er sich unter Spannung an die Innenseite der Buchse 6' anlegt. Auf diese Weise ist ein Herausgleiten des Federdrahtendes 4'b aus der Büchse 6' nicht möglich. Die Büchse 6' kann direkt am unteren Teil 2 des Stossdämpfers angeschweisst sein. Sie kann aber auch über eine Halterung, ähnlich wie in den Fig. 1 bis 3 dargestellt, mit dem unteren Teil 2 des Stossdämpfers verbunden sein.

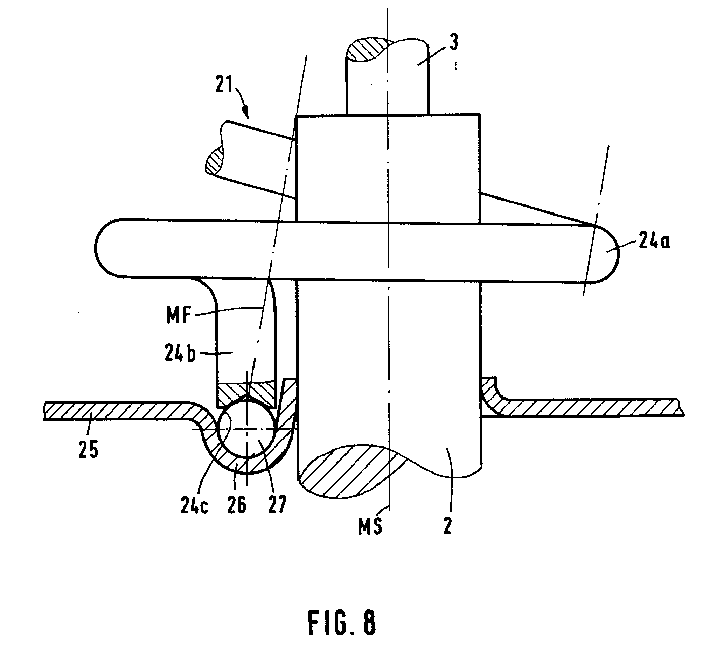

In Fig. 8 ist das untere Ende einer Ausführungsform für eine federnde Aufhängeeinrichtung dargestellt, bei der die Federaufnahme etwas anders ausgebildet ist als bei den oben beschriebenen Ausführungsformen.

Auch bei dieser Ausführungsform ist bei der Schraubendruckfeder 21 der Federdraht am unteren Ende spiralig nach innen geführt und durch den spiraligen Abschnitt 24a, ähnlich wie bei den oben beschriebenen Ausführungsformen, der Stossdämpfer 2, 3 hindurchgeführt. Das Ende 24b des Federdrahtes ist zum Federende hin abgebogen, aus dem Federende herausgeführt und sitzt in einer Federaufnahme, die mit dem unteren Teil 2 des Stossdämpfers verbunden ist. Die Federaufnahme ist als Lagerschale 26 ausgebildet, die in einen Federteller 25 integriert ist. In die Lagerschale 26 ist eine Kugel 27 aus hartem Material eingesetzt. Auf dieser Kugel 27 sitzt das Ende 24b des Federdrahtes mit seiner Stirnfläche auf, welche ein hohlkegelförmige Einsenkung 24c aufweist. Auf diese Weise ist das Ende 24b des Federdrahtes in der Aufnahme 26 zentriert, und es entsteht an dieser Stelle ein gelenkartige Verbindung. Anstelle der Kugel 27 kann auch eine Halbkugel in die Lagerschale 26 eingesetzt werden, auf deren konvexer Oberfläche das Ende des Federdrahtes aufsitzt.

**Patentansprüche**

1. Federne Aufhängeeinrichtung, insbesondere Radaufhängung für Kraftfahrzeuge, mit einem von einer Schraubendruckfeder (1, 11) umgebenen Teleskop-Stossdämpfer (2, 3), wobei die beiden gegeneinander verschiebbaren Teile des Stossdämpfers jeweils mit einem der Enden der Schraubendruckfeder (1, 11) kraftschlüssig verbunden sind und die Längsachse (MS) des Stossdämpfers gegenüber der Mittelachse (MF) der Schraubendruckfeder versetzt angeordnet ist und an mindestens einem Ende der Schraubendruckfeder (1, 11) der Federdraht (4, 14) auf einer Spirale nach innen geführt ist, wobei die Spirale so gelegt ist, dass der vom Stossdämpfer (2, 3) durchsetzte Teil (5, 15) des Federinnenraumes von den Spiralwindungen (4a, 14a) mindestens teilweise umfasst ist, dadurch gekennzeichnet, dass der Federdraht an einem in der unmittelbaren Umgebung der Mittelachse (MF) der Schraubendruckfeder (1, 11) liegenden Punkt der Spirale zum Federende hin abgebogen ist und im wesentlichen parallel zur Längsachse (MS) des Stossdämpfers (2) so aus dem Ende der Schraubendruckfeder (1, 11) herausgeführt ist, dass das Ende (4b, 14b) des Federdrahtes auf der Mittelachse (MF) der Schraubendruckfeder (1, 11) liegt und über eine Federaufnahme mit dem ihm zugeordneten Teil (2) des Stossdämpfers (2, 3) verbunden ist.

2. Aufhängeeinrichtung nach Anspruch 1, dadurch gekennzeichnet, dass die Federaufnahme als neben dem Stossdämpfer (2, 3) an diesem befestigte einseitig geschlossene Büchse (6a, 6b) ausgebildet ist, in welcher das Ende (4b, 4'b, 14b) des Federdrahtes geführt ist.

3. Aufhängeeinrichtung nach Anspruch 2, dadurch gekennzeichnet, dass zwischen dem Boden (6a) der Büchse (6) und dem Ende des Federdrahtes (4b, 14b) eine Platte (7) aus einem nicht elastischen Material angeordnet ist, dessen Härte geringer ist als die Härte des Materials des Federdrahtes (4, 14) und der Büchse (6).

4. Aufhängeeinrichtung nach Anspruch 2 oder 3, dadurch gekennzeichnet, dass zwischen der Mantelfläche des in die Büchse (6) eingeführten Endes des Federdrahtes (4b, 14b) und den Seitenwänden (6b) der Büchse (6) gummielastisches Material (8) angeordnet ist.

5. Aufhängeeinrichtung nach Anspruch 2 oder 3, dadurch gekennzeichnet, dass in die Mantelfäche des in die Büchse (6') eingeführten Endes (4'b) des Federdrahtes eine umlaufende Nut (16) eingearbeitet ist, in der ein Ring (17) aus gummielastischem Material angeordnet ist, dessen Aussendurchmesser so bemessen ist, dass er unter Spannung an der Innenseite der Büchse (6') anliegt.

6. Aufhängeeinrichtung nach einem der Ansprüche 1 bis 5, dadurch gekennzeichnet, dass die Spirale mehr als eine Windung (14a) aufweist.

7. Aufhängeeinrichtung nach einem der Ansprüche 1 bis 6, dadurch gekennzeichnet, dass der Federdraht mindestens auf einem Teil des nach innen geführten Abschnittes auf einer solchen Spirale geführt ist, dass gleichen Änderungen im Windungsradius gleiche Änderungen des durchlaufenden Winkels entsprechen (archimedische Spirale).

8. Aufhängeeinrichtung nach einem der Ansprüche 1 bis 6, dadurch gekennzeichnet, dass der Federdraht mindestens auf einem Teil des nach innen geführten Abschnittes auf einer solchen Spirale geführt ist, dass gleichen Änderungen im Windungsradius gleiche Bogenlängen der entsprechenden Windungsabschnitte entsprechen (log-Spirale).

4

9. Aufhängeeinrichtung nach einem der Ansprüche 1 bis 6, dadurch gekennzeichnet, dass der Federdraht mindestens auf einem Teil des nach innen geführten Abschnittes auf einer solchen Spirale geführt ist, dass bei vorgegebener Windungszahl dieses Abschnittes die Drahtlänge des Abschnittes ein Maximum besitzt.

10. Aufhängeeinrichtung nach einem der Ansprüche 1 bis 9, dadurch gekennzeichnet, dass die Schraubendruckfeder eine Zylinderfeder mit teilweise progressiver Kennlinie ist, bei der der Federdraht (4) an einem Ende spiralig nach innen geführt ist, während an dem anderen Ende ein Federauflageteller (9) angeordnet ist, an dem sich die Endwindung abstützt und sich bei zunehmender Belastung die Windungen zur Erzeugung des progressiven Teils der Kennlinie in Richtung auf diese Endwindung sukzessive aneinander anlegen.

11. Aufhängeeinrichtung nach Anspruch 10, dadurch gekennzeichnet, dass der Federdraht (14) an einem Ende spiralig in mehreren Windungen nach innen geführt ist.

12. Aufhängeeinrichtung nach einem der Ansprüche 1 bis 9, dadurch gekennzeichnet, dass die Schraubendruckfeder eine Kegelstumpffeder mit teilweiser progressiver Kennlinie ist, bei der am Ende mit kleinem Windungsdurchmesser der Federdraht spiralig nach innen geführt ist, während am anderen Ende ein Federauflageteller angeordnet ist, auf den sich die sich bei zunehmender Belastung ineinanderlegenden Windungen zur Erzeugung des progressiven Teils der Kennlinie sukzessive auflegen.

13. Aufhängeeinrichtung nach einem der Ansprüche 1 bis 9, dadurch gekennzeichnet, dass die Schraubendruckfeder eine Doppelkegelstumpffeder mit teilweise progressiver Kennlinie und von der Federmitte nach den beiden Enden hin abnehmendem Windungsdurchmesser ist, bei der das eine Ende des Federdrahtes aus dem Federende herausgeführt und über die Federaufnahme mit dem ihm zugeordneten Teil des Stossdämpfers verbunden ist, während am anderen Ende ein Federauflageteller angeordnet ist, auf den sich die sich bei zunehmender Belastung ineinanderlegenden Windungen zur Erzeugung des progressiven Teils der Kennlinie sukzessive auflegen.

14. Aufhängeeinrichtung nach Anspruch 1, dadurch gekennzeichnet, dass die Federaufnahme als Lagerschale (26) ausgebildet ist, in die als Abstützeinlage eine Kugel (27) oder Halbkugel aus hartem Material eingesetzt ist, auf deren konvexer Oberfläche die mit einer hohlkegelförmigen Einsenkung (24c) versehene Stirnfläche des Endes des Federdrahtes (24b) aufsitzt.

15. Aufhängeeinrichtung nach Anspruch 14, dadurch gekennzeichnet, dass die Federaufnahme als Einsenkung in einem Federteller (25) ausgebildet ist.

**Claims**

1. Elastic suspension device, particularly a motor vehicle wheel suspension, comprising a telescopic shock absorber (2, 3) surrounded by a helical compression spring (1, 11), whereby the two relatively displaceable components of the shock absorber are each non-positively connected with one end of the helical compression spring (1, 11), the longitudinal axis (MS) of the shock absorber being offset relatively to the central axis (MF) of the helical compression spring, and, at least at one end of the helical compression spring (1, 11) the spring wire (4, 14) being guided inwardly in a spiral, wereby the spiral is placed so that part of the interior space (5, 15) of the spring which is occupied by the shock absorber (2, 3), is at least partially enclosed by the spiral windings (4a, 14a), characterized in that the spring wire, at a point of the spiral directly adjacent to the central axis (MF) of the helical compression spring (1, 11), is bent off towards the end of the spring and, substantially parallel to the longitudinal axis (MS) of the shock absorber (2), is led out from the end of the helical compression spring (1, 11) in such a manner that the end (4b, 14b) of the spring wire is located on the central axis (MF) of the helical compression spring (1, 11) and, through a spring carrier, is connected with the associated component (2) of the shock absorber (2, 3).

2. Suspension device as claimed in claim 1, characterized in that the spring carrier is formed as a sleeve (6a, 6b) which is closed on one side and is attached to the shock absorber (2, 3) adjacent thereto in which sleeve the end (4b, 4'b, 14b) of the spring wire is guided.

3. Suspension device as claimed in claim 2, characterized in that, between the bottom (6a) of the sleeve (6) and the end of the spring wire (4b, 14b), a plate (7) made of a non-elastic material is arranged, the hardness of said material being less than that of the spring wire (4, 14) and the sleeve (6).

4. Suspension device as claimed in claim 2 or 3, characterized in that, between the outer surface of the end of the spring wire (4b, 14b) which ist inserted in the sleeve (6), and the side walls (6b) of said sleeve (6), a rubber-elastic material (8) is provided.

5. Suspension device as claimed in claim 2 or 3, characterized in that a continuous groove (16) is machined into the outer surface of the end (4'b) of the spring wire which is inserted in the sleeve (6'), in which groove (16) a ring (17) made of rubber-elastic material is received, the outer diameter of said ring being dimensioned such that it contacts the inner side of the sleeve (6') under tension.

6. Suspension device as claimed in one of claims 1 to 5, characterized in that the spiral comprises more than one winding (14a).

7. Suspension device as claimed in one of claims 1 to 6, characterized in that the spring wire, at least on part of its inwardly bent portion, follows such kind of a spiral that equal in the winding radius correspond to equal changes of the angle, of traverse (Archimedes spiral).

8. Suspension device as claimed in one of claims 1 to 6, characterized in that the spring wire, at least on part of its inwardly bent portion, follows such kind of a spiral that equal changes in the winding radius correspond to equal arc lengths of the corresponding winding portions (log-spiral).

9. Suspension device as claimed in one of claims 1 to 6, characterized in that the spring wire, at least on part of its inwardly bent portion, follows such kind of a spiral of that, upon a predetermined numbers of windings of said portion, the wire lenght of this portion is at a maximum.

10. Suspension device as claimed in one of claims 1 to 9, characterized in that the helical compression spring is a cylindrical spring having, in part, progressive characteristic curve in which cylindrical spring the spring wire (4), at one end thereof, is quided spirally inwardly whereas, at the other end, a spring support plate (9) is arranged against which the final winding bears whereby, upon increasing load, the windings successively contact each other for creating the progressive portion of the characteristic curve in a direction towards said final winding.

11. Suspension device as claimed in claim 10, characterized in that the spring wire (14), at one end thereof, is quided spirally inwardly in several windings.

12. Suspension device as claimed in one of claims 1 to 9, characterized in that the helical compression spring is a frusto-conical spring having a partially progressive characteristic curve, in which, at the end having a small winding diameter, the spring wire is bent spirally inwardly whereas, at the other end, a spring support plate is provided against which, upon increasing load, the windings successively bear one within the other for creating the progressive portion of the characteristic curve.

13. Suspension device as claimed in one of claims 1 to 9, characterized in that the helical compression spring is a double frusto-conical spring having a partially progressive characteristic curve and decreasing in diameter from the centre of the spring towards the two ends thereof, whereby one end of the spring wire is led out from the end of the spring and, through the spring carrier, is connected with the associated component of the shock absorber, whereas, at the other end, a spring support plate is arranged against which, upon increasing load, the windings successively bear one within the other for creating the progressive portion of the characteristic curve.

14. Suspension device as claimed in claim 1, characterized in that the spring carrier is formed as a bearing box (26) in which, as a supporting filler, a ball (27) or a hemisphere is inserted, on the convex surface of which rests the end face of the end portion of the spring wire (24b) which is provided with a concave recess (24c).

15. Suspension device as claimed in claim 14, characterized in that the spring carrier is formed as a depression in a spring washer (25).

**Revendications**

1. Dispositif de suspension élastique et, en particulier, suspension de roue pour véhicules automobiles, comportant un amortisseur téléscopique (2, 3) entouré par un ressort de compression hélicoïdal (1, 11), où les deux parties de l'amortisseur glissant l'une dans l'autre sont fixées mécaniquement chacune à une extrémité du ressort de compression hélicoïdal (1, 11) et où l'axe longitudinal (MS) de l'amortisseur est décalé par rapport à l'axe central (MF) du ressort de compression hélicoïdal et où au moins à une extrémité du ressort de compression hélicoïdal (1, 11) le fil de ressort (4, 14) est dirigé vers l'intérieur suivant une spirale qui est conçue de façon à ce que la partie (5, 15) de l'espace intérieur du ressort traversée par l'amortisseur (2, 3) soit entourée, au moins partiellement, par les spires de la spirale (4a, 14a), caractérisé en ce que le fil de ressort est cintré en un point de la spirale situé au voisinage immédiat de l'axe central (MF) du ressort de compression hélicoïdal (1, 11) en direction de l'extrémité du ressort et est amené depuis l'extrémité du ressort de compression hélicoïdal (1, 11) de manière essentiellement parallèle à l'axe longitudinal (MS) de l'amortisseur (2), en ce que l'extrémité (4b, 14b) du fil de ressort prend appui sur l'axe central (MF) du ressort de compression hélicoïdal (1, 11) et qu'il est fixé par une fixation de ressort à la partie correspondante (2) de l'amortisseur (2, 3).

2. Dispositif de suspension selon la revendication 1, caractérisé en ce que la fixation de ressort est constituée par une douille (6a, 6b) fermée d'un côté, située à côté de l'amortisseur (2, 3) et fixée à celui-ci, et dans laquelle est introduite l'extrémité (4b, 4'b, 14b) du fil de ressort.

3. Dispositif de suspension selon la revendication 2, caractérisé en ce qu'une plaque (7) en matériau non élastique dont la dureté est inférieure à la dureté du matériau du fil de ressort (4, 14) et de la douille (6) est disposée entre le fond (6a) de la douille (6) et l'extrémité du fil de ressort (4b, 14b).

4. Dispositif de suspension selon la revendication 2 ou 3, caractérisé en ce qu'un matériau élastique à base de caoutchouc (8) est disposé entre la surface périphérique de l'extrémité du fil de ressort (4b, 14b) inséré dans la douille (6) et les parois latérales (6b) de la douille 6.

5. Dispositif de suspension selon la revendication 2 ou 3, caractérisé en ce qu'une rainure périphérique (16) est prtiquée dans la surface périphérique de l'extrémité (4'b) du fil de ressort inséré dans la douille (6'), une bague (17) en matériau élastique à base de caoutchouc étant inséréé dans cette rainure et son diamètre extérieur étant tel qu'elle appuie sous tension contre la face intérieure de la douille (6').

6. Dispositif de suspension selon l'une des revendications 1 à 5, caractérisé en ce que la spirale comporte plus d'une spire (14a).

7. Dispositif de suspension selon l'une des revendications 1 à 6, caractérisé en ce que le fil de ressort est amené sur au moins une partie de la section dirigée vers l'intérieur suivant une spirale telle que des variations du rayon de courbure égales correspondent à des variations égales de l'angle parcouru (spirale d'Archimède).

8. Dispositif de suspension selon l'une des revendications 1 à 6, caractérisé en ce que le fil de ressort est dirigé sur au moins une partie de la section tournée vers l'intérieur suivant une spirale telle que des variations égales du rayon de courbure correspondent à des longueurs d'arc égales des sections de spires correspondantes (spirale logarithmique).

9. Dispositif de suspension selon l'une des revendications 1 à 6, caractérisé en ce que le fil de ressort est dirigé sur au moins une partie de la section amenée vers l'intérieur suivant une spirale telle que, pour un nombre prédéterminé de spires de cette section, la longueur de fil de cette section atteigne un maximum.

10. Dispositif de suspension selon l'une des revendications 1 à 9, caractérisé en ce que le ressort de compression hélicoïdal est un ressort cylindrique avec une caractéristique partiellement progressive, dans lequel le fil de ressort (4) est dirigé vers l'intérieur à une extrémité suivant une spirale, tandis qu'un plateau support de ressort (9) est disposé à l'autre extrémité, la spire terminale prenant appui sur ce plateau et les spires venant appuyer successivement l'une sur l'autre en direction de ces spires teminales pour créer la partie progressive de la caractéristique.

11. Dispositif de suspension selon la revendication 10, caractérisé en ce que le fil de ressort (14) est amené vers l'intérieur à une extrémité suivant une spirale comportant plusieurs spires.

12. Dispositif de suspension selon l'une des revendications 1 à 9, caractérisé en ce que le ressort de compression hélicoïdal est un ressort tronconique à caractéristiques partiellement progressives, dans lequel le fil de ressort est amené en spirale vers l'intérieur à une extrémité avec un diamètre de spire faible, tandis qu'à l'autre extrémité est disposé un plateau support de ressort sur lequel viennent appuyer successivement, en cas de charge croissante les spires superposées, de façon à créer la partie progressive de leurs caractéristique.

13. Dispositif de suspension selon l'une des revendications 1 à 9, caractérisé en ce que le ressort de compression hélicoïdal est un ressort en double tronc de cône, avec caractéristique partiellement progressive et avec diamètre des spires diminuant depuis le milieu du ressort vers les deux extrémités, dans lequel une extrémité du fil de ressort est amenée depuis l'extrémité du ressort et est fixée à la partie correspondante de l'amortisseur par l'intermédiaire d'une fixation de ressort, tandis qu'à l'autre extrémité est disposé un plateau support de ressort, sur lequel viennent appuyer successivement les spires superposées, en cas de charge croissante, de façon à créer la partie progressive de la caractéristique.

14. Dispositif de suspension selon la revendication 1, caractérisé en ce que la fixation de ressort est constituée par un coussinet (26), dans lequel est insérée un bille (27) ou une demi-bille en matériau dur servant de support à insérer et sur la surface convexe de laquelle vient prendre appui par un renfoncement en forme de tronc de cône creux (24c), la surface frontale de l'extrémité du fil de ressort (24b).

15. Dispositif de suspension selon la revendication 14, caractérisé en ce que la fixation de ressort est constituée par un renfoncement pratiqué dans un plateau support de ressort (25).

FIG.1

FIG. 2

FIG. 3

FIG. 4

FIG. 5

FIG. 6

**FIG. 7**

FIG. 8